# EUROPEAN PATENT APPLICATION

(11) **EP 1 930 883 A1**
(43) Date of publication of application: **11.06.2008**
(21) Application number: 07117592.1
(22) Date of filing: 01.10.2007
(51) Int. Cl.: G11B 5/73

(54) **Magnetic recording medium, magnetic recording apparatus, and method of manufacturing magnetic recording medium**

(30) Priority: 30.11.2006 JP 2006323520
(71) Applicant: Fujitsu Ltd., Kawasaki-shi, Kanagawa 211-8588 (JP)
(72) Inventor: Gouke, Takashi c/o YAMAGATA FUJITSU LIMITED, Higashine-shi, Yamagata 999-3701 (JP)
(74) Representative: Cooper-Rolfe, Elizabeth Louise

(57) **Abstract**

This invention relates to a magnetic recording medium that magnetically records information, and the like. The magnetic recording medium (20) enhances write-reception performance by reducing the distance between a recording layer (25) and a backing layer (22) while maintaining low noise performance. The magnetic recording medium (20) has a non-magnetic substrate (21), a backing layer (22) formed on the non-magnetic substrate (21), an underlayer (23) formed on the backing layer (22), an intermediate layer (24) formed on the underlayer (23), and a recording layer (25) which is formed on the intermediate layer (24) and which is a perpendicular magnetic anisotropy. The intermediate layer (24) includes two or more layers which are formed as film layers such that an upper layer (242) of the two or more layers has a thicker film thickness and a higher gas pressure at which the layer is formed in comparison to a layer under the upper layer (241).

## Description

### BACKGROUND OF THE INVENTION

### Field of the Invention

The present invention relates to a magnetic recording medium that magnetically records information, a magnetic recording apparatus that includes the magnetic recording medium, and a method of manufacturing the magnetic recording medium.

### Description of the Related Art

Accompanying the development of the information-oriented society, in addition to the conventional uses for personal computers and servers, magnetic recording mediums are now being provided in car navigation systems, portable music players, HDD recorders, mobile phones and the like because of their high transfer capabilities and storage capacities. In order to achieve further miniaturization and increases in capacity, there is a demand for further increases in recording densities for magnetic recording. In view of this situation, to achieve higher recording densities, the development of perpendicular magnetic recording mediums that magnetically record information by magnetizing a magnetic recording medium in the thickness direction thereof is being actively pursued in recent years.

Perpendicular magnetic recording has the advantage that, as a result of the effect achieved by an anisotropic magnetic field of neighboring recording bits, the higher the recording density is, the more stable the magnetization becomes. As a result, resistance to thermal fluctuations is also strengthened. In addition, in some cases a backing layer that includes a hard magnetic material is also formed on the perpendicular magnetic recording medium. Although recording and playback are possible even if a backing layer is not provided, a combination of a magnetic head and a backing layer allows a magnetic field generated from the magnetic head at a time of recording to be amplified to a significantly greater amount of approximately 1.3 times or more in comparison to a conventional head for in-plane recording. Consequently, it is possible to impart a higher coercive force to a perpendicular magnetic recording medium than to an in-plane magnetic recording medium. Further, since the backing layer draws in a magnetic field (magnetic flux) generated from the recording head in a steep manner, the backing layer also has an effect such that the magnetic gradient becomes smaller and lessens the influence of writing in an increased areal magnetization domain.

Thus, perpendicular magnetic recording mediums have various advantages over in-plane magnetic recording mediums. However, for perpendicular magnetic recording mediums also, it is essential to reduce noise to achieve higher recording densities. To accomplish this, it is essential to reduce the orientation dispersion of the easy magnetization axis of the recording layer. It is known that forming an underlayer including an amorphous layer of Ta, W, Mo or the like and a layer having a face centered cubic structure of Fe, Ni, Pd, or Ag, and the like and an intermediate layer having a cubic close packed structure of Ru, Re or the like, in that order on the backing layer is effective for suppressing the orientation dispersion. It is also known that the effect is increased as the thickness of each layer increases. Japanese Patent Laid-Open No. 2005-353256 proposes a magnetic recording medium in which an intermediate layer is composed of two layers, and a under layer side of those two layers consists of a metallic material formed in the shape of an islet. Forming an intermediate layer with the structure proposed in Japanese Patent Laid-Open No. 2005-353256 is effective in reducing the medium noise.

However, in the case of the intermediate layer proposed in Japanese Patent Laid-Open No. 2005-353256, the thickness of the intermediate layer increases and thus the distance between the recording layer and the backing layer also increases. When there becomes a large distance between the recording layer and the backing layer, the steepness of the gradient of the magnetic field generated from the recording head is lost. As a result, the problem arises that the write-reception performance that is the capability of the magnetic recording medium to be subjected to recording of information is noticeably deteriorated, and conversely there is a risk of the intermediate layer in question becoming a hindrance to achieving a higher recording density.

### SUMMARY OF THE INVENTION

Accordingly it is desirable to provide a magnetic recording medium that shortens a distance between a recording layer and a backing layer while retaining low noise performance, a magnetic recording apparatus that includes the magnetic recording medium, and a method of manufacturing the magnetic recording medium.

A magnetic recording medium according to an embodiment of the present invention has a non-magnetic substrate, a backing layer that is formed on the non-magnetic substrate, an underlayer that is formed on the backing layer, an intermediate layer that is formed on the underlayer; and a recording layer that is formed on the intermediate layer and that has a perpendicular magnetic anisotropy, wherein the intermediate layer includes two or more layers which are formed as film layers such that the intermediate layer includes two or more layers which are formed as film layers such that an upper layer of the two or more layers has a thicker film thickness and a higher gas pressure at which the layer is formed in comparison to a layer under the upper layer.

In the case of the magnetic recording medium proposed in Japanese Patent Laid-Open No. 2005-353256, although the intermediate layer (referred to as "underlayer" in Japanese Patent Laid-Open No. 2005-353256) is composed of two layers of Ru and the gas pressure and deposition rate when forming each layer are stipulated, the thicknesses of those two layers are of varying sizes. Further, in the case of Japanese Patent Laid-Open No. 2005-353256, it is difficult to accomplish high-volume production with the stipulated deposition rate. In contrast, according to the magnetic recording medium embodying the present invention, since the intermediate layer includes two or more layers which are formed as film layers such that an upper layer of the two or more layers has a thicker film thickness and a higher gas pressure at which the layer is formed in comparison to a layer under the upper layer, as described in detail later in the embodiments section, the overall layer thickness of the intermediate layer can be made thin, and thus the distance between the recording layer and the backing layer can be reduced while retaining low noise performance.

In this case, in the magnetic recording medium embodying the present invention, preferably each of the two or more layers included in the intermediate layer is a non-magnetic layer having a hexagonal close packed structure. Further, preferably each of the two or more layers included in the intermediate layer is a Ru layer.

In addition, in the magnetic recording medium embodying the present invention, preferably the underlayer is a layer consisting of a single layer having a face centered cubic structure, and the underlayer is a Ni-Cr layer.

According to an embodiment of the present invention, the crystal orientation of the intermediate layer can be enhanced. Therefore, an amorphous layer of Ta, W, Mo or the like can be omitted from the underlayer that is to be a base of the intermediate layer, and the underlayer can be provided as only one layer having a face centered cubic structure of Fe, Ni, Pd, Ag or the like. Therefore, when a structure is adopted in which the underlayer consists of only one layer, the distance between the recording layer and the backing layer can be reduced further.

Further, in the magnetic recording medium according to an embodiment of the present invention, preferably the backing layer is a layer that consists of a first soft magnetic layer including an amorphized material, a non-magnetic layer formed on the first soft magnetic layer, and a second soft magnetic layer that includes an amorphized material and that is formed on the non-magnetic layer.

By adopting a backing layer having this structure, it is possible to enhance the coercive force of the recording layer and further improve reliability of writing and reading of information.

In this case, when a backing layer having the aforementioned structure is adopted, preferably each of the first soft magnetic layer and the second soft magnetic layer is a Co-Fe-Zr-Ta layer, and the non-magnetic layer is a Ru layer.

In the magnetic recording medium embodying the present invention, the recording layer is a layer having a hexagonal close packed structure. Further, the recording layer is a layer that consists of two layers each of which is a granular layer and a cap layer formed on the granular layer. When a two-layer structure consisting of a granular layer and a cap layer is adopted for the recording layer, preferably the granular layer is a Co-Cr-Pt-Oxide layer and the cap layer is a Co-Cr-Pt-B layer.

A magnetic recording apparatus according to an embodiment of the present invention includes a magnetic recording medium in which information is magnetically recorded, a magnetic head that performs writing of information to the magnetic recording medium and reading of information from the magnetic recording medium, and movement means of moving the magnetic head along the magnetic recording medium surface relatively with respect to the magnetic recording medium, wherein the magnetic recording medium has a non-magnetic substrate, a backing layer that is formed on the non-magnetic substrate, an underlayer that is formed on the backing layer, an intermediate layer that is formed on the underlayer, and a recording layer that is formed on the intermediate layer and has a perpendicular magnetic anisotropy, and the intermediate layer includes two or more layers which are formed as film layers such that an upper layer of the two or more layers has a thicker film thickness and a higher gas pressure at which the layer is formed in comparison to a layer under the upper layer.

A method of manufacturing a magnetic recording medium according to an embodiment of the present invention has the steps of: forming a backing layer on a non-magnetic substrate; forming an underlayer on the backing layer; forming an intermediate layer on the underlayer; and forming a recording layer having a perpendicular magnetic anisotropy on the intermediate layer; wherein the step of forming the intermediate layer is a step of forming an intermediate layer including two or more layers by forming the two or more layers as film layers such that an upper layer of the two or more layers has a thicker film thickness and a higher gas pressure at which the layer is formed in comparison to a layer under the upper layer.

As described in the foregoing, according to an embodiment of the present invention it is possible to make the film thickness of the intermediate layer thinner than in the prior art. Further, it is possible to dispense with formation of an amorphous layer of Ta, W, or Mo or the like in an underlayer that is formed on the upper layer of a backing layer. It is thus possible to reduce the distance between the recording layer and the backing layer to enhance the write-reception performance and achieve a higher recording density while retaining low noise performance.

### BRIEF DESCRIPTION OF THE DRAWINGS

Preferred embodiments of the present invention will be described in detail based on the following figures.
Fig. 1 is a view showing the layer structure of a conventional magnetic recording medium.
Fig. 2 is a schematic diagram that centrally shows the structure of an intermediate layer among the layer structure shown in Fig. 1.
Fig. 3 is a view showing the layer structure of a magnetic recording medium as one embodiment of the present invention.
Fig. 4 is a schematic diagram that centrally shows the structure of an intermediate layer among the layer structure shown in Fig. 3.
Fig. 5 is a view showing a list that compares the properties of the prior art (comparative example) as shown in Fig. 1 and Fig. 2 with those of the technique of the present invention as shown in Fig. 3 and Fig. 4.
Fig. 6 is a schematic configuration diagram of a load/unload-type magnetic disk apparatus in a state in which the top cover is removed.
Fig. 7 is a view showing the schematic structure of a tip portion of an arm shown in Fig. 6.

### DETAILED DESCRIPTION OF THE INVENTION

Hereunder, embodiments of the present invention will be described.

First, a comparative example as the prior art is described, and next an embodiment of the present invention is described.

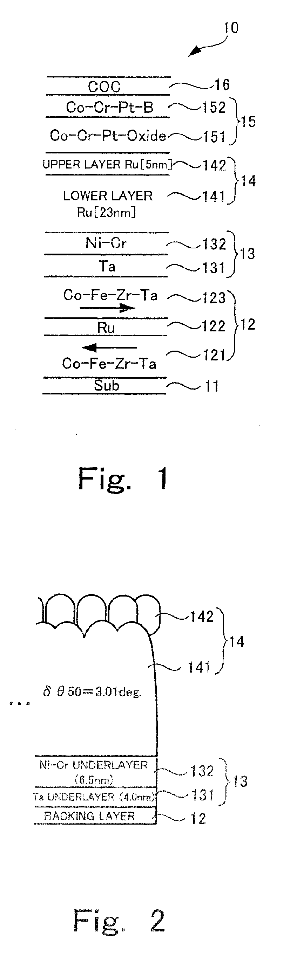

Fig. 1 is a view showing the layer structure of a conventional magnetic recording medium.

In the case of a magnetic recording medium 10 shown in Fig. 1, a backing layer 12, an underlayer 13, an intermediate layer 14, a recording layer 15, and a protective layer 16 are formed in that order on a non-magnetic substrate 11.

In the example shown here, the backing layer 12 consists of a first soft magnetic layer 121 made of an amorphized material (in this case, Co-Fe-Zr-Ta), a non-magnetic layer 122 made of a non-magnetic material (in this case, Ru) that is formed on the first soft magnetic layer 121, and a second soft magnetic layer 123 made of an amorphized material (in this case, Co-Fe-Zr-Ta, similarly to the first soft magnetic layer 121) that is formed on the non-magnetic layer 122. The arrows shown in the first soft magnetic layer 121 and the second soft magnetic layer 123 in Fig. 1 indicate the directions of magnetization. By subjecting the first soft magnetic layer 121 and the second soft magnetic layer 123 to antiferromagnetic coupling in which the soft magnetic layers 121 and 123 are magnetized in opposite directions to each other, as shown in Fig. 1, a magnetically stable backing layer 12 is formed. The backing layer 12 acts to absorb the magnetic flux from the recording head and suppress the spread of a magnetic field from the magnetic head.

The underlayer 13 consists of two layers that include an amorphous layer 131 of Ta and a Ni-Cr layer 132 having a face centered cubic structure formed on the amorphous layer 131. In this case, the Ni-Cr layer 132 is a layer that is oriented in a (1, 1, 1) direction, and the amorphous layer 131 of Ta thereunder acts to enhance the crystal orientation of the Ni-Cr.

The intermediate layer 14 consists of a lower layer 141 of Ru and an upper layer 142 of Ru. The lower layer 141 is, for example, a layer of a thickness of about 23 nm that is formed under a gas pressure of 2 Pa. The crystallinity is ensured by forming a thick film and a proper degree of surface roughness (a surface roughness that is suitable for contributing to the crystal isolation structure of the upper layer 142) is ensured by performing film formation at a moderate gas pressure.

The upper layer 142 is a layer for which a crystal isolation structure is ensured by formation at a slow film formation rate (e.g. 1.25 nm/sec) and a high gas pressure (e.g. 8 Pa).

In the example shown in Fig. 1., the recording layer 15 consists of a granular layer 151 made of Co-Cr-Pt-Oxide, and a cap layer 152 made of Co-Cr-Pt-B for adjusting the Hc (coercive force) of the granular layer 151.

A protective layer consisting of carbon (COC (carbon overcoat) layer) is formed on the recording layer 15 to protect the recording layer 15.

Fig. 2 is a schematic diagram that centrally shows the structure of the intermediate layer among the layer structure shown in Fig. 1.

In the case of the layer structure shown in Fig. 1, the thickness of the amorphous layer 131 of Ta among the two layers that constitute the underlayer 13 is, for example, 4.0 nm, and the thickness of the layer of Ni-Cr formed thereon is, for example, 6.5 nm.

Further, in the layers of the intermediate layer 14, the lower layer 141 is a layer with a thickness of 23 nm that is formed at a gas pressure of 2 Pa, and the upper layer 142 is a layer with a thickness of 5 nm that is formed at a gas pressure of 8 Pa. In this case, a proper degree of surface roughness is ensured for the lower layer 141 by performing thick film formation at a moderate gas pressure (2 Pa), and this contributes to formation of an isolation structure of the upper layer 142 thereon. In the case of the intermediate layer 14, a crystal orientation of δ θ50 = 3.01 deg. is obtained by the combination of the lower layer 141 and the upper layer 142.

However, in the case of this layer structure, the underlayer 13 is formed in two layers and the thickness of the intermediate layer that is formed thereon is also thick. Consequently, the distance between the recording layer and the backing layer is large, and even though it is attempted to ensure the steepness of the gradient of a magnetic field that is generated from the recording head by forming a backing layer, there is a problem that the steepness is lost and it is difficult to improve the write-reception performance of the magnetic recording medium.

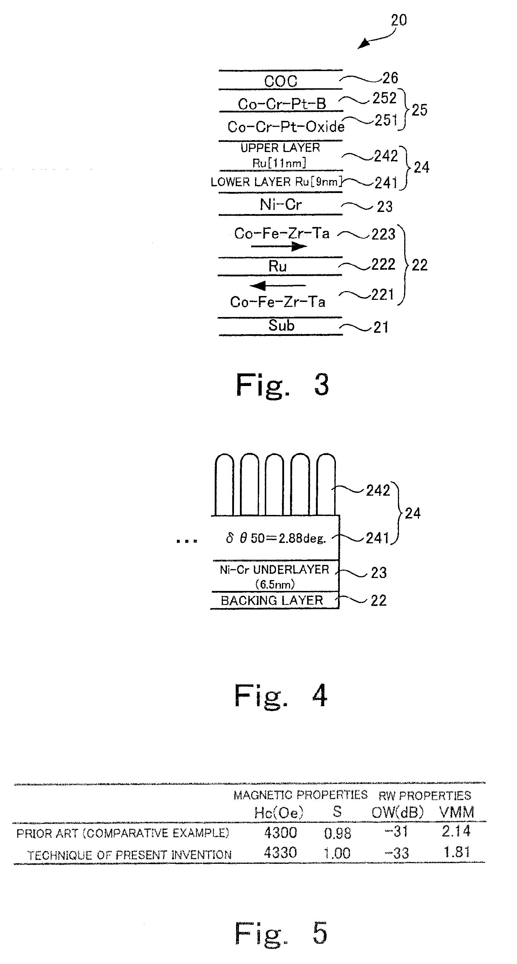

Fig. 3 is a view showing the layer structure of a magnetic recording medium as one embodiment of the present invention.

A magnetic recording medium 20 shown in Fig. 3 has a layer structure that is similar to that of the magnetic recording medium 10 shown in Fig. 1 with respect to sections enclosed by large brackets. In the magnetic recording medium 20, a backing layer 22, an underlayer 23, an intermediate layer 24, a recording layer 25 and a protective layer 26 are formed in order on a non-magnetic substrate 21.

The backing layer 22 has a structure that is the same as that of the backing layer 12 in the magnetic recording medium 10 shown in Fig. 1. The backing layer 22 consists of a first soft magnetic layer 221 made of Co-Fe-Zr-Ta, a non-magnetic layer 222 made of Ru that is formed on the first soft magnetic layer 221, and a second soft magnetic layer 223 made of Co-Fe-Zr-Ta that is formed on the non-magnetic layer 222. Since the backing layer 22 is the same as the backing layer 12 of the magnetic recording medium 10 shown in Fig. 1, a further description, thereof is omitted herein.

In the case of the magnetic recording medium 20 shown in Fig. 3, the underlayer 23 that is formed on the backing layer 22 consists of only one layer that has a face centered cubic structure made of Ni-Cr. The amorphous layer 131 of Ta that is formed in the magnetic recording medium 10 shown in Fig. 1 is not formed for the underlayer 23 of the magnetic recording medium 20. The amorphous layer 131 of Ta plays a role of enhancing the crystal orientation of the Ni-Cr thereon. In the embodiment shown in Fig. 3, the crystal orientation of the Ni-Cr of the underlayer 23 will tend to drop because the amorphous layer 131 of Ta is not formed. However, because the embodiment shown in Fig. 3 is designed to enhance the crystal orientation of the intermediate layer 24 thereon in comparison to the conventional example shown in Fig. 1, even if the crystal orientation of the Ni-Cr of the underlayer 23 starts to drop, the amorphous layer 131 of Ta thereunder can be omitted.

In the case of the present embodiment, omission of the amorphous layer 131 of Ta shown in Fig. 1 as well as making the intermediate layer formed thereon in a thin film are useful for shortening the distance between the recording layer and the backing layer.

As shown in Fig. 3, in the case of the magnetic recording medium 20 of the present embodiment, similarly to the magnetic recording medium 10 of the conventional example shown in Fig. 1, the intermediate layer 24 consists of two layers including the lower layer 241 and the upper layer 242 that are both made of Ru. However, in the present example, the lower layer 241 has a thickness of 9 nm and the upper layer 242 has a thickness of 11 nm. Thus the layer structure is such that the upper layer 242 is thicker than the lower layer 241. Further, the pressure at the time of film formation is 0.67 Pa for the lower layer 241 and 8 Pa for the upper layer 242. The intermediate layer 24 is described in further detail later.

The recording layer 25 that is formed on the intermediate layer 24 consists of a granular layer 251 made of Co-Cr-Pt-Oxide and a cap layer 252 made of Co-Cr-Pt-B, similarly to the recording layer 15 of the magnetic recording medium, 10 of the conventional example shown in Fig. 1.

The protective layer 26 formed thereon is also the same as that of the magnetic recording medium 10 of the conventional example shown in Fig. 1.

Fig. 4 is a schematic diagram that centrally shows the structure of the intermediate layer in the layer structure shown in Fig. 3.

In the layer structure shown in Fig. 3, the underlayer 23 is composed of only one layer that has a face centered cubic structure of Ni-Cr. The amorphous layer 131 of Ta in the layer structure of the conventional example shown in Fig. 1 is not present in the underlayer 23. Consequently, in the present embodiment, compared to the conventional example shown in Fig. 1, the distance between the recording layer 25 and the backing layer 22 is reduced, first of all, by the amount saved by the absence of the amorphous layer of Ta.

Further, the intermediate layer 24 consists of the lower layer 241 and the upper layer 242 that are each made of Ru having a non-magnetic, hexagonal close packed structure. The lower layer 241 is a layer of a thickness of 9 nm that is made by film formation at a gas pressure of 0.67 Pa. The upper layer 242 is a layer of a thickness of 11 nm that is made by film formation at a gas pressure of 8 Pa. Therefore, in comparison with the lower layer 241, the film thickness of the upper layer 242 is thicker and the upper layer 242 is made by film formation at a higher gas pressure.

Thus, with respect to the lower layer 241, a thin film is formed such that the crystallinity is improved by formation at a low gas pressure, and with respect to the upper layer 242, the isolation structure of crystal grains is facilitated by forming a thick film under a high gas pressure. As a result, even without forming a Ta layer in the underlayer 23, the intermediate layer 24 can be formed as a thin film without degrading the properties of the intermediate layer 24.

More specifically, according to the present embodiment, by the dual effects of forming the intermediate layer 24 as a thin film and omitting the Ta layer from the underlayer 23, the distance between the recording laver 25 (see Fig. 3) and the backing layer 22 is shortened to improve the write-reception performance.

Further, for the intermediate layer 24 in the present embodiment, δ θ50 = 2.88 deg. when the lower layer 241 and the upper layer 242 are combined. Thus, the crystal orientation is improved in comparison to the δ θ50 = 3.01 deg. of the intermediate layer 14 of the conventional example shown in Fig. 2. As a result, low medium noise is obtained.

Fig. 5 is a view showing a list including the properties of the prior art (comparative example) shown in Fig. 1 and Fig. 2 with those of the technique of the present invention as shown in Fig. 3 and Fig. 4.

In this case, two kinds of indicators, Hc (coercive force) and S (squareness), are shown as magnetic properties, and two kinds of indicators, OW (overwrite) and VNM, are shown as RW (read/write) properties. The magnetic properties are values that are measured utilizing the Kerr effect.

Hc (coercive force) is an indicator that shows the stability of magnetization with respect to disturbance. As the higher that the Hc is, the better the results obtained with respect to thermal stability and the more favorable the low noise and high resolution performance that are obtained.

S (squareness) is determined by the ratio between residual magnetization and saturation magnetization. The higher the S value is, the more favorable the crystal orientation is.

OW (overwrite) represents the residual level of high frequency components when overwriting is performed at a low frequency after writing at a high frequency. The lower the OW value is, the more favorable the write-reception performance is.

VNM is an indicator of the error rate. The lower the value for VNM is, the better the low noise performance is.

Based on the results shown in Fig. 5, it is found that for all of the indicators the technique of the present invention shown in Fig. 3 and Fig. 4 is superior to the prior art (comparative example) shown in Fig. 1 and Fig. 2.

The foregoing is a description of the layer structure of the magnetic recording medium itself. Although the intermediate layer 24 shown in Fig. 3 and Fig. 4 is consists of two layer of the lower layer 241 and the upper layer 242, according to an embodiment of the present invention the intermediate layer may be a layer consisting of three or more layers in which the film thickness is thicker in order from a layer on the lower layer side to a layer on the upper layer side and which are formed by film formation at sequentially higher gas pressures in that order.

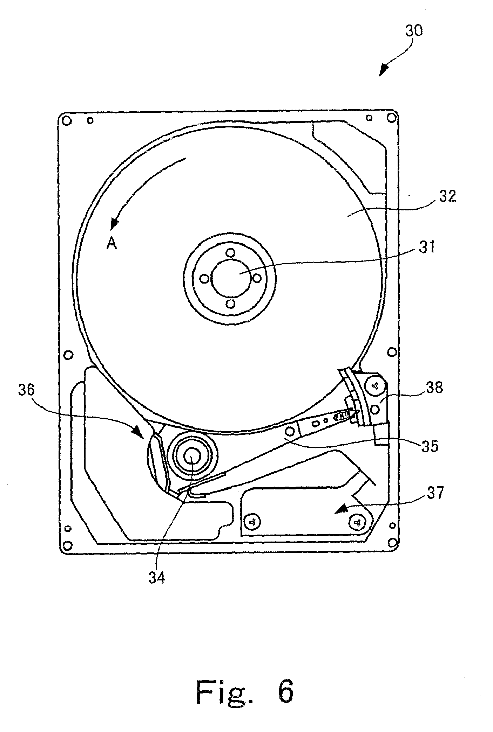

Fig. 6 is a view showing one embodiment of a magnetic recording apparatus according to the present invention. The figure shows a schematic configuration diagram of a load/unload-type magnetic disk apparatus in a state in which the top cover is removed.

In the magnetic disk apparatus 30, a magnetic disk 32 is provided that is rotationally driven in the direction of an arrow A around a rotating shaft 31 by an unshown disk control motor (DCM).

The magnetic disk 32 has the layer structure shown in Fig. 3 and Fig. 4, and is one embodiment of the magnetic recording medium of the present invention.

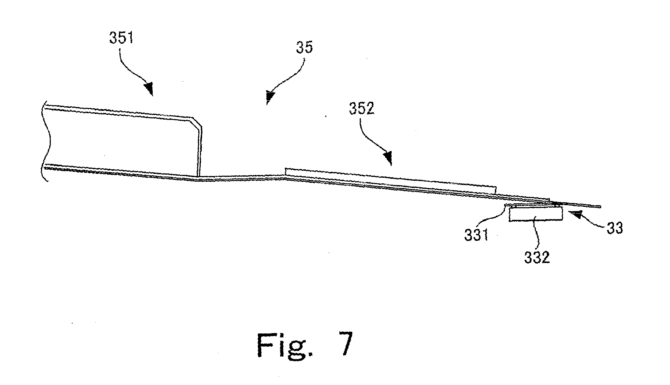

The magnetic disk apparatus 30 is also provided with an arm 35 that rotates around a rotating shaft 34 and that includes a magnetic head 33 (see Fig. 7) at a tip portion facing the magnetic disk 32, and a voice coil motor (VCM) 36 that rotationally drives the arm 35 to move the magnetic head 33 in the radial direction of the magnetic disk 32. Further, the magnetic disk apparatus 30 is provided with an activated carbon desiccant unit (AD unit) 37 for maintaining the air inside the apparatus in a dry state. Furthermore, a ramp 38 for supporting the tip portion of the arm 35 when the arm is unloaded is also provided in the magnetic disk apparatus 30.

Upon writing data to the magnetic disk 32 or reading data that is stored on the magnetic disk 32, the arm 35 is rotatably driven by the VCM 36 in a state in which the magnetic disk 32 is rotationally driven by the DCM. At that time, as shown in Fig. 6, the arm 35 is disengaged from a state in which it is supported by the ramp 38 and the magnetic head 33 (see Fig. 7) provided at the tip portion thereof moves (is loaded) over the magnetic disk 32. Further, the magnetic head 33 is positioned at a desired track on the magnetic disk 32 so that, accompanying rotation of the magnetic disk 32, data is magnetically written in sequence on the desired track on the magnetic disk 32 or data is magnetically picked up in sequence by the magnetic head 33. Upon completion of writing to the magnetic disk 32 or reading from the magnetic disk 32, the arm 35 is unloaded as far as the position shown in Fig. 6 to be supported by the ramp 38, and the rotation of the magnetic disk 32 stops.

Fig. 7 is a view showing the schematic structure of the tip portion of the arm 35 shown in Fig. 6.

The arm 35 has a carriage 351 that extends from the rotating shaft of the arm 35, and a suspension 352 that has a rear portion which is attached to the tip portion of the carriage 351 and that extends further from the tip portion of the carriage 351. The suspension 352 includes the magnetic head 33 at the tip portion thereof. The magnetic head 33 has a gimbal 331 that is supported in a freely swaying manner by the tip portion of the suspension 352, and a slider 332 that is supported by the gimbal 331. When the arm 35 is loaded over the magnetic disk 32, the slider 332 enters a state in which the slider 332 floats within only an extremely small distance from the magnetic disk 32. Thereafter, data is written to the magnetic disk 32 or data is read from the magnetic disk 32 by the magnetic head that is provided at one part of the slider 332 and that directly accesses the magnetic disk 32.

Since the magnetic recording medium (magnetic disk) having the structure as described with reference to Fig. 3 and Fig. 4 is adopted in the magnetic disk apparatus 30 that is configured as shown in Fig. 6 and Fig. 7, information can be recorded at high density with high reliability.

## Claims

1. A magnetic recording medium comprising:
a non-magnetic substrate;
a backing layer that is formed on the non-magnetic substrate;
an underlayer that is formed on the backing layer;
an intermediate layer that is formed on the underlayer; and
a recording layer that is formed on the intermediate layer and that has a perpendicular magnetic anisotropy;
wherein the intermediate layer includes two or more layers which are formed as film layers such that an upper layer of the two or more layers has a thicker film thickness and a higher gas pressure at which the layer is formed in comparison to a layer under the upper layer.

2. The magnetic recording medium according to claim 1, wherein each of the two or more layers included in the intermediate layer is a non-magnetic layer having a hexagonal close packed structure.

3. The magnetic recording medium according to claim 1, wherein each of the two or more layers included in the intermediate layer is a Ru layer.

4. The magnetic recording medium according to any preceding claim, wherein the underlayer is a layer consisting of a single layer having a face centered cubic structure.

5. The magnetic recording medium according to any preceding claim, wherein the underlayer is a Ni-Cr layer.

6. The magnetic recording medium according to any preceding claim, wherein the backing layer is a layer that consists of a first soft magnetic layer including an amorphized material, a non-magnetic layer formed on the first soft magnetic layer, and a second soft magnetic layer that includes an amorphized material and that is formed on the non-magnetic layer.

7. The magnetic recording medium according to claim 6, wherein each of the first soft magnetic layer and the second soft magnetic layer is a Co-Fe-Zr-Ta layer, and the non-magnetic layer is a Ru layer.

8. The magnetic recording medium according to any preceding claim, wherein the recording layer is a layer having a hexagonal close packed structure.

9. The magnetic recording medium according to any of claims 1-7, wherein the recording layer is a layer that consists of two which includes a granular layer and a cap layer formed on the granular layer.

10. The magnetic recording medium according to claim 9, wherein the granular layer is a Co-Cr-Pt-Oxide layer and the cap layer is a Co-Cr-Pt-B layer.

11. A magnetic recording apparatus comprising:
a magnetic recording medium in which information is magnetically recorded;
a magnetic head that performs writing of information to the magnetic recording medium and reading of information from the magnetic recording medium; and
movement means of moving the magnetic head along the magnetic recording medium surface relatively with respect to the magnetic recording medium,
wherein the magnetic recording medium has a non-magnetic substrate, a backing layer that is formed on the non-magnetic substrate, an underlayer that is formed on the backing layer, an intermediate layer that is formed on the underlayer, and a recording layer that is formed on the intermediate layer and has a perpendicular magnetic anisotropy, and
the intermediate layer includes two or more layers which are formed as film layers such that an upper layer of the two or more layers has a thicker film thickness and a higher gas pressure at which the layer is formed in comparison to a layer under the upper layer.

12. A method of manufacturing a magnetic recording medium comprising the steps of:
forming a backing layer on a non-magnetic substrate;
forming an underlayer on the backing layer;
forming an intermediate layer on the underlayer; and
forming a recording layer having a perpendicular magnetic anisotropy on the intermediate layer;
wherein the step of forming the intermediate layer is a step of forming an intermediate layer including two or more layers by forming the two or more layers as film layers such that an upper layer of the two or more layers has a thicker film thickness and a higher gas pressure at which the layer is formed in comparison to a layer under the upper layer.

13. The method of manufacturing a magnetic recording medium according to claim 12, wherein the step of forming the intermediate layer is a step of forming an intermediate layer including two or more layers that each have a non-magnetic, hexagonal close packed structure.

14. The method of manufacturing a magnetic recording medium according to claim 12, wherein the step of forming the intermediate layer is a step of forming an intermediate layer including two or more layers each being a Ru layer.

15. The method of manufacturing a magnetic recording medium according to claim 12, wherein the step of forming the intermediate layer is a step of forming an intermediate layer including two layers consisting of a lower Ru layer and an upper Ru layer, by forming a film as the lower layer made of Ru at a gas pressure of 0.67 Pa and, further, forming a film as the upper layer made of Ru at a gas pressure of 8 Pa.

16. The method of manufacturing a magnetic recording medium according to claim 12, wherein the step of forming the intermediate layer is a step of forming an intermediate layer including two Ru layers consisting of a lower Ru layer and an upper Ru layer, by forming a film as the lower layer which is made of Ru and whose thickness is 9 mm and, further, forming a film as the upper layer which is made of Ru and whose thickness is 11 mm.

17. The method of manufacturing a magnetic recording medium according to any of claims 12-16, wherein the step of forming the underlayer is a step of forming an underlayer consisting of a single layer having a face centered cubic structure.

18. The method of manufacturing a magnetic recording medium according to claim 17, wherein the step of forming the underlayer is a step of forming a Ni-Cr layer.

19. The method of manufacturing a magnetic recording medium according to any of claims 12-18, wherein the step of forming the backing layer is a step of forming a first soft magnetic layer made of an amorphized material, forming a non-magnetic layer on the first soft magnetic layer, and forming a second soft magnetic layer made of an amorphized material on the non-magnetic layer.

20. The method of manufacturing a magnetic recording medium according to claim 19, wherein the step of forming the backing layer is a step of forming a first soft magnetic layer made of Co-Fe-Zr-Ta, forming a non-magnetic layer made of Ru on the first soft magnetic layer, and forming a second soft magnetic layer made of Co-Fe-Zr-Ta on the non-magnetic layer.

## Amended claims

### Amended claims in accordance with Rule 137(2) EPC.

**1.** A magnetic recording medium comprising:
a non-magnetic substrate;
a backing layer that is formed on the non-magnetic substrate;
an underlayer that is formed on the backing layer and that is a single Ni-Cr layer having a face centered cubic structure;
an intermediate layer that is formed on the underlayer; and
a recording layer that is formed on the intermediate layer and that has a perpendicular magnetic anisotropy;
wherein the intermediate layer includes two or more layers which are formed as film layers such that an upper layer of the two or more layers has a higher film thickness and a higher gas pressure at which the layer is formed in comparison to a layer under the upper layer.

**2.** The magnetic recording medium according to claim 1, wherein each of the two or more layers included in the intermediate layer is a non-magnetic layer having a hexagonal close packed structure.

**3.** The magnetic recording medium according to claim 1, wherein each of the two or more layers included in the intermediate layer is a Ru layer.

**4.** The magnetic recording medium according to any preceding claim, wherein the backing layer is a layer that consists of a first soft magnetic layer including an amorphized material, a non-magnetic layer formed on the first soft magnetic layer, and a second soft magnetic layer that includes an amorphized material and that is formed on the non-magnetic layer.

**5.** The magnetic recording medium according to claim 4, wherein each of the first soft magnetic layer and the second soft magnetic layer is a Co-Fe-Zr-Ta layer, and the non-magnetic layer is a Ru layer.

**6.** The magnetic recording medium according to any preceding claim, wherein the recording layer is a layer having a hexagonal close packed structure.

**7.** The magnetic recording medium according to any of claims 1-6, wherein the recording layer is a layer that consists of two layers which includes a granular layer and a cap layer formed on the granular layer.

**8.** The magnetic recording medium according to claim 7, wherein the granular layer is a Co-Cr-Pt-Oxide layer and the cap layer is a Co-Cr-Pt-B layer.

**9.** A magnetic recording apparatus comprising:
a magnetic recording medium in which information is magnetically recorded;
a magnetic head that performs writing of information to the magnetic recording medium and reading of information from the magnetic recording medium; and
movement means of moving the magnetic head along the magnetic recording medium surface relatively with respect to the magnetic recording medium,
wherein the magnetic recording medium has a non-magnetic substrate, a backing layer that is formed on the non-magnetic substrate, an underlayer that is formed on the backing layer and that is a single Ni-Cr layer having a face centered cubic structure, an intermediate layer that is formed on the underlayer, and a recording layer that is formed on the intermediate layer and has a perpendicular magnetic anisotropy, and
the intermediate layer includes two or more layers which are formed as film layers such that an upper layer of the two or more layers has a higher film thickness and a higher gas pressure at which the layer is formed in comparison to a layer under the upper layer.
